# FASCICULE DE BREVET EUROPEEN

(11) **EP 1 698 238 B1**
(45) Date de publication et mention de la délivrance du brevet: **11.06.2008**
(21) Numéro de dépôt: 06290197.0
(22) Date de dépôt: 03.02.2006
(51) Int. Cl.: A23L 1/164, A23L 1/0526

(54) **Barre céréalière agglomérée par un liant**
Getreideriegel, dass durch einem Bindemittel agglomeriert ist
Cereal bar agglomerated with a binding agent

(30) Priorité: 04.03.2005 FR 0502190
(43) Date de publication de la demande: 06.09.2006
(73) Titulaire: Generale Biscuit, 91200 Athis Mons (FR)
(72) Inventeur: Veit, Vanessa, 92260 Fontenay aux Roses (FR); Sence, Claude, 94440 Villecresnes (FR)
(74) Mandataire: Jacquard, Philippe Jean-Luc

(56) Documents cités:
- EP-A- 0 306 773
- EP-A- 0 434 025
- FR-A- 2 724 821
- US-A1- 2002 058 089
- US-A1- 2004 013 771
- US-A1- 2005 002 989
- US-A1- 2005 008 748

## Description

La présente invention concerne une barre céréalière agglomérée par un liant.

Les liants connus utilisés pour agglomérer les barres céréalières comportent habituellement du sirop de glucose, de la matière grasse et un émulsifiant, et présentent toujours une quantité notable de sucre.

On connaît du Brevet EP 1 164 870 une barre céréalière dans laquelle le liant comporte du sucre, des solides de lait et un agent liant.

D'autres liants sont décrits par exemple dans EP 0 306 773; EP 0 434 025; ou encore US 2002 058 089.

En particulier, le liant peut comporter en poids entre 10 et 70 parties de sucre, 0,5 à 5 parties d'agent de liaison, jusqu'à 40 parties de solides de lait, jusqu'à 15 parties de glycérine, et jusqu'à 60 parties de pulpe de fruit ou de concentré, jusqu'à 10 parties de cacao en poudre et de l'eau ajoutée pour que la liaison ait entre 10 à 30% de contenu en eau.

La présence nécessaire de sucre a pour inconvénient de modifier le goût du produit et d'introduire un composant qu'il serait au contraire souhaitable d'éliminer.

La présente invention a ainsi pour objet une barre céréalière dont le liant est essentiellement dépourvu de sucre.

Le liant comporte une purée de fruit concentrée ainsi que de la gomme de xanthane (E 415) et du caroube (E 410).

En particulier, l'invention concerne une barre céréalière qui comporte :
- un liant comprenant de la purée de fruit concentrée (par exemple de pomme et/ou de fruits rouges) entre 28% et 60% du poids de la barre, de la gomme de xanthane entre 0,3% et 4% du poids de la barre, et du caroube entre 0,3% et 5% du poids de la barre,
- et d'autre part des céréales et éventuellement des fruits agglomérés par le liant, en quantité suffisante pour atteindre 100% du poids de la barre.

L'absence de sucre ajouté dans la formule du liant permet de conférer à la barre céréalière un goût de fruit très fort, peu sucré et légèrement acide, et elle permet d'obtenir des produits sans gras ni sucre ajoutés, riches en fruits et en céréales.

Les propriétés diététiques de la barre céréalières selon l'invention sont particulièrement avantageuses, car elle est naturellement riche en vitamines (à cause des fruits) et source de glucides lents.

La présence de gomme de xanthane et de caroube permet d'obtenir une bonne tenue de la barre.

Le procédé de fabrication de la barre compte les étapes suivantes :
- mélange par quantités données (ou «batch ») des ingrédients du liant avec adjonction éventuelle d'un arôme naturel ;
- mélange notamment en continu des céréales et des d'éventuels autres ingrédients secs ;
- chauffage à une température de fluidification (par exemple 60°C) et pompage du liant et mélange avec les ingrédients secs ;
- dépose du mélange sous forme d'une abaisse ;
- calibrage et formage ;
- refroidissement du mélange à partir de la température précitée (par exemple 60°C) ;
- découpe (longitudinale et/ou transversale) de l'abaisse pour obtenir des barres rectangulaires ou semi-arrondies ;
- conditionnement.

Ce procédé est réalisable notamment sur une ligne de type "muesli croustillant".

Les agglomérats obtenus se caractérisent par une texture très croustillante. Les qualités des ingrédients mis en oeuvre sont relativement bien préservées : bonne visibilité des céréales, fruits ou autres.

La définition d'une purée de fruit est donnée par la législation (Directive 2001/113/CE relative aux confitures) : il s'agit de la partie comestible du fruit entier, épluchée ou épépinée si besoin est, cette partie comestible étant réduite en purée par tamisage ou autre procédé similaire. La purée de fruit concentrée est un mélange de purée de fruit et de jus, préparé par exemple par évaporation sous vide, correspondant à une concentration de par exemple 6 fois les ingrédients de départ.

La gomme xanthane (E 415) est présente entre 0,3 à 4%, plus particulièrement 1% à 3%, de préférence 1,5% à 2,5% et la valeur préférée est de 2% (du poids de la formule totale).

Le caroube, dénommé selon la législation "farine de graine de caroube (E 410)" est présent entre 0,3% et 5%, plus particulièrement entre 1% et 4%, de préférence entre 1,5% et 2,5% et notamment sa teneur préférée est de 2% (du poids de la formule totale).

Les fourchettes de formulation sont indiquées dans le tableau ci-après.

Formulation préférée avec échelle d'utilisation (% mise en oeuvre sur la formule totale)

| Matières premières du liant | MIN | MOYENNE | MAX |
|---|---|---|---|
| Purée de fruit concentrée | 28% | 30% | 60% |
| Gomme xanthane | 0,3% | 2% | 4% |
| Caroube | 0,3% | 2% | 5% |

| Matières premières du mélange céréales - fruit | MIN | MOYENNE | MAX |
|---|---|---|---|
| Flocons | 5% | 27% | 60% |
| Billettes | 5% | 27% | 60% |
| Fruits | 0% | 12% | 20% |

La formulation « moyenne » correspond à une proportion pondérale de 34% de liant et de 66% d'ingrédients secs dans le poids total de la barre.

Après refroidissement, le liant est dans un état très visqueux, quasi solide (valeur Brix de 79 pour la formulation "moyenne")

Les céréales susceptibles d'être utilisées sont les suivants :
- flocons : "cornflakes", flocons de blé, de seigle ou d'avoine;
- billettes extrudées.

Il est possible d'ajouter des ingrédients sucrés secs par exemple des morceaux de fruits séchés, de fruits reconstitués, de fruits lyophilisés jusqu'à 20% dans la formulation ci-dessus.

## Revendications

1. Barre céréalière comportant des ingrédients secs à basé de céréale, agglomérés par un liant, **caractérisé en ce que** le liant est dépourvu de sucre ajouté et de matière grasse ajoutée et comporte une purée de fruit concentrée ainsi que de la gomme de xanthane et du caroube.

2. Barre céréalière selon la revendication 1, **caractérisée en ce qu**'elle comporte, en pourcentage du poids total de la barre :
- d'une part, pour le liant : entre 28% et 60% de purée de fruit concentrée, de la gomme de xanthane entre 0,3% et 4% et du caroube entre 0,3% et 5%
- et d'autre part, des ingrédients secs contenant au moins des céréales, qui sont agglomérés par le liant, en quantité suffisante pour atteindre 100% du poids total de la barre.

3. Barre céréalière selon la revendication 2, **caractérisée en ce que** la teneur pondérale en gomme de xanthane est comprise entre 1% et 3%, de préférence entre 1,5% et 2,5%.

4. Barre céréalière selon la revendication 3, **caractérisée en ce que** la teneur pondérale en gomme de xanthane est égale à 2%.

5. Barre céréalière selon une des revendications 2 à 4, **caractérisée en ce que** la teneur pondérale en caroube est comprise entre 1 % et 4%, de préférence entre 1,5% et 2,5%.

6. Barre céréalière selon la revendication 5, **caractérisée en ce que** la teneur pondérale en caroube est égale à 2%.

7. Barre céréalière selon la revendication 2, **caractérisée en ce que** ledit liant comporte 30% de purée de fruit concentrée, 2% de gomme de xanthane et 2% de caroube.

8. Barre céréalière selon l'une des revendications précédentes, **caractérisée en ce que** les ingrédients secs comportent (en % du poids total de la barre) entre 5% et 60% de flocons de céréale, entre 5% et 60% de billettes extrudées et entre 0% et 20% de fruits.

9. Barre céréalière selon la revendication 8, **caractérisée en ce que** les ingrédients secs comportent 27% de céréales en flocon, 27% de billettes extrudées et 12% de fruits.

10. Barre céréalière selon l'une quelconque des revendications 8 ou 9, **caractérisée en ce que** les fruits sous forme d'ingrédient sec sont des fruits séchés, reconstitués ou lyophilisés.

11. Procédé de fabrication d'une barre céréalière selon une des revendications précédentes, **caractérisé en ce qu**'il comporte :
- un mélange des ingrédients du liant,
- un mélange des céréales et des éventuels autres ingrédients secs,
- un chauffage à une température de fluidification du liant et un pompage du liant et un mélange avec les ingrédients secs,
- une dépose du mélange sous forme d'une abaisse,
- un calibrage et un formage,
- un refroidissement du mélange à partir de ladite température,
- une découpe de l'abaisse pour obtenir des barres rectangulaires ou semi-arrondis.

12. Procédé selon la revendication 11, **caractérisé en ce que** ladite température est sensiblement égale à 60°C.

## Claims

1. A cereal bar comprising cereal-based dry ingredients bound together by a binder, the bar being **characterized in that** the binder does not have added sugar or added fat and includes a concentrated fruit puree together with xanthan gum and carob.

2. A cereal bar according to claim 1, **characterized in that** it comprises, in percentage relative to the total weight of the bar:
· firstly, for the binder: 28% to 60% concentrated fruit puree, 0.3% to 4% xanthan gum, and 0.3% to 5% carob; and
· secondly dry ingredients containing at least cereals that are bound together by the binder, in sufficient quantity to make up 100% of the total weight of the bar.

3. A cereal bar according to claim 2, **characterized in that** the content by weight of xanthan gum lies in the range 1% to 3%, and preferably in the range 1.5% to 2.5%.

4. A cereal bar according to claim 3, **characterized in that** the content by weight of xanthan gum is equal to 2%.

5. A cereal bar according to any one of claims 2 to 4, **characterized in that** the content by weight of carob lies in the range 1% to 4%, preferably in the range 1.5% to 2.5%.

6. A cereal bar according to claim 5, **characterized in that** the content by weight of carob is equal to 2%.

7. A cereal bar according to claim 2, **characterized in that** the said binder comprises 30% concentrated fruit puree, 2% xanthan gum, and 2% carob.

8. A cereal bar according to any preceding claim, **characterized in that** the dry ingredients comprise (in percentage of the total weight of the bar) 5% to 60% cereal flakes, 5% to 60% extruded billets, and 0% to 20% fruit.

9. A cereal bar according to claim 8, **characterized in that** the dry ingredients comprise 27% cereal flakes, 27% extruded billets, and 12% fruit.

10. A cereal bar according to claim 8 or claim 9, **characterized in that** the fruit in dry ingredient form comprises fruit that has been dried, reconstituted, or freeze-dried.

11. A method of fabricating a cereal bar according to any preceding claim, the method being **characterized in that** it comprises:
·mixing the ingredients of the binder;
mixing cereals and any other dry ingredients;
· heating to a fluidification temperature of the binder and pumping the binder and a mixture with the dry ingredients;
· depositing the mixture in the form of a rolled dough;
· calibrating and forming;
· cooling the mixture from said temperature; and
· cutting up the dough to obtain rectangular or semirounded bars.

12. A method according to claim 11, **characterized in that** said temperature is substantially equal to 60°C.

## Patentansprüche

1. Getreideriegel, enthaltend Trockenzutaten auf Getreidebasis, verbunden durch ein Bindemittel, **dadurch gekennzeichnet, dass** das Bindemittel frei ist von Zuckerzusatz und von Fettzusatz und ein konzentriertes Fruchtmark sowie Xanthangummi und Johannisbrot enthält.

2. Getreideriegel nach Anspruch 1, **dadurch gekennzeichnet, dass** er in Gewichtsprozent bezogen auf das Gesamtgewicht des Riegels enthält:
- für das Bindemittel: zwischen 28% und 60% konzentriertes Fruchtmark, zwischen 0,3% und 4% Xanthangummi und zwischen 0,3% und 5% Johannisbrot einerseits
- und andererseits Trockenzutaten, die wenigstens durch ein Bindemittel verbundene Getreide enthalten, in ausreichender Menge um 100% des Gesamtgewichts des Riegels zu erreichen.

3. Getreideriegel nach Anspruch 2, **dadurch gekennzeichnet, dass** der Gewichtsanteil von Xanthangummi zwischen 1 % und 3%, bevorzugt zwischen 1,5% und 2,5% ist.

4. Getreideriegel nach Anspruch 3, **dadurch gekennzeichnet, dass** der Gewichtsanteil von Xanthangummi gleich 2% ist.

5. Getreideriegel nach einem der Ansprüche 2 bis 4, **dadurch gekennzeichnet, dass** der Gewichtsanteil von Johannisbrot zwischen 1 % bis 4%, bevorzugt zwischen 1,5% und 2,5% ist.

6. Getreideriegel nach Anspruch 5, **dadurch gekennzeichnet, dass** der Gewichtsanteil von Johannisbrot gleich 2% ist.

7. Getreideriegel nach Anspruch 2, **dadurch gekennzeichnet, dass** das Bindemittel 30% konzentriertes Fruchtmark, 2% Xanthangummi und 2% Johannisbrot enthält.

8. Getreideriegel nach einem der vorhergehenden Ansprüche, **dadurch gekennzeichnet, dass** die Trockenzutaten (in % bezogen auf das Gesamtgewicht des Riegels) zwischen 5% und 60% Getreideflocken, zwischen 5% und 60% extrudierte Stücke und zwischen 0% bis 20% Früchte enthalten.

9. Getreideriegel nach Anspruch 8, **dadurch gekennzeichnet, dass** die Trockenzutaten 27% Getreideflocken, 27% extrudierte Stücke und 12% Früchte enthalten.

10. Getreideriegel nach einem der Ansprüche 8 oder 9, **dadurch gekennzeichnet, dass** die Früchte, die als Trockenzutat vorliegen, getrocknete, rekonstituierte oder lyophilisierte Früchte sind.

11. Verfahren zur Herstellung eines Getreideriegels nach einem der vorhergehenden Ansprüche, **dadurch gekennzeichnet, dass** es
- Vermischen von Bindemittelzutaten,
- Vermischen von Getreide und eventuell anderen Trockenzutaten,
- Erwärmen bei einer Temperatur bei der sich das Bindemittel verflüssigt und Pumpen des Bindemittels und Vermischen mit den Trockenzutaten,
- Ausbreiten der Mischung in Form eines ausgerollten Teiges,
- Kalibrieren und Formen,
- Abkühlen der Mischung ausgehend von der besagten Temperatur,
- Zerschneiden des Teiges um rechteckige oder halbrunde Riegel zu enthalten beinhaltet.

12. Verfahren nach Anspruch 11, **dadurch gekennzeichnet, dass** die besagte Temperatur etwa 60°C beträgt.
